(19) Europäisches Patentamt
European Patent Office
Office européen des brevets

(11) EP 2 410 008 B1

(12) **EUROPEAN PATENT SPECIFICATION**

(45) Date of publication and mention of the grant of the patent:
**20.11.2013 Bulletin 2013/47**

(51) Int Cl.:
***C08K 3/34*** *(2006.01)* ***C08L 23/10*** *(2006.01)*
*C08L 23/16* *(2006.01)*

(21) Application number: **10170456.7**

(22) Date of filing: **22.07.2010**

(54) **Bimodal talc filled heterophasic polypropylene**

Bimodales Talk gefülltes heterophasische Polypropylen

Polypropylène hétérophasique chargé de talc bimodal

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**25.01.2012 Bulletin 2012/04**

(73) Proprietor: **Borealis AG**
**1220 Vienna (AT)**

(72) Inventors:
- **Hristov, Velichko**
  **4040, Linz (AT)**
- **Grein, Christelle**
  **4020, Linz (AT)**

(74) Representative: **Lux, Berthold**
**Maiwald Patentanwalts GmbH**
**Elisenhof**
**Elisenstraße 3**
**80335 München (DE)**

(56) References cited:
**GB-A- 2 213 156** **US-A1- 2001 008 915**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 410 008 B1

## Description

The present invention is directed to a new polypropylene/mineral filler composition, its use and preparation.

Polypropylene is the material of choice in many applications as it can be tailored to specific purposes needed. For instance polypropylene is widely used in the automobile industry as it is long-lasting and robust. Typically polypropylene is additivated inter alia with mineral fillers to improve stiffness. However, the presence of commercial fillers affects normally negatively the impact behavior of polypropylene. Heterophasic polypropylene systems can compensate to some extent this negative trend caused by mineral fillers. Accordingly heterophasic polypropylenes are widely used in the automobile industry (for instance in bumper applications) as they combine reasonable stiffness with good impact strength behavior. Heterophasic polypropylenes contain a polypropylene matrix in which an amorphous phase is dispersed. The amorphous phase contains a propylene copolymer rubber, like an ethylene propylene rubber (EPR) or an ethylene propylene diene monomer polymer (EPDM). Further the heterophasic polypropylene may contain a crystalline polyethylene to some extent. Typically the amount of mineral fillers, like talc, within the heterophasic systems is 5 to 30 wt.-%. Overall such materials offer an accepted balance of stiffness and impact strength. However, nowadays the automotive industry seeks for more ambitious materials. For instance there is the desire that the materials show further improvement in stiffness and impact. Additionally nowadays the parts to be produced become bigger and bigger and therefore excellent flowability is necessary to overcome high pressure during injection molding. Another advantage of high flow materials is a reduction of cycle-time. On the other hand the material shall not be prone to temperature changes in terms of thermal expansions.

Thus the object of the present invention is to provide a material which exhibits excellent stiffness and impact paired with good processability, in particular in terms of high flowability. Further it is appreciated that the material has a rather low coefficient of linear thermal expansion.

The finding of the present invention is to add to a polypropylene at least two different mineral fillers, one with a high aspect ratio and the other with a low particle size, wherein these two fillers are added in different amounts. Preferably the polypropylene is a heterophasic system.

Thus the present invention is directed to a polypropylene composition comprising polypropylene (PP) and at least two different mineral fillers (F1) and (F2), wherein

(a) the first mineral filler (F1) has a lower median particle size d50 [mass percent] determined by sedimentation technique compared to the median particle size d50 [mass percent] determined by sedimentation technique of the second mineral filler (F2), and

(b) the second mineral filler (F2) has a lamellarity index (LI) of more than 2.90, the lamellarity index is defined by formula (I)

$$\frac{d50(L) - d50(S)}{d50(S)} \qquad (I)$$

wherein

d50 (L) is the median particle size d50 [mass percent] determined by laser diffraction technique, and

d50 (S) is the median particle size d50 [mass percent] determined by sedimentation technique,

wherein further the weight ratio of the first mineral filler (F1) to the second mineral filler (F2) is in the range of

(i) 10/90 to below 30/70,

or

(ii) more than 70/30 to 90/10 and wherein the mineral fillers (F1) and (F2) are phyllosilicates.

Preferably the polypropylene (PP) is a heterophasic propylene copolymer (HECO), in particular a heterophasic propylene copolymer (HECO) as defined in detail below.

It has been surprisingly found out that the polypropylene composition according to this invention possesses very high stiffness and impact paired with good flowability, compared to known heterophasic propylene copolymer systems using mineral fillers. Additionally the coefficient of linear thermal expansion is very low.

The present invention will be now described in more detail.

One requirement is that the polypropylene composition comprises two different mineral fillers (F1) and (F2).

As mentioned above the first mineral filler (F1) shall have a lower median particle size d50 [mass percent] determined by sedimentation technique compared to the median particle size d50 [mass percent] determined by sedimentation technique of the second mineral filler (F2).

Alternatively or additionally the first mineral filler (F1) has a lower cutoff particle size d95 [mass percent] determined by sedimentation technique compared to the cutoff particle size d95 [mass percent] determined by sedimentation technique of the mineral filler (F2).

Thus it is appreciated that the first mineral filler (F1) has

(a) a median particle size d50 [mass percent] determined by sedimentation technique being at least 0.5 μm, more preferably at least 0.8 μm, lower than the median particle size d50 [mass percent] determined by sedimentation technique of the second mineral filler (F2),
and/or
(b) a cutoff particle size d95 [mass percent] determined by sedimentation technique being at least 1.0 μm, more preferably at least 3.0 μm, still more preferably at least 5.0 μm, lower than the cutoff particle size d95 [mass percent] determined by sedimentation technique of the mineral filler (F2).

Therefore it is appreciated that the first mineral filler (F1) has

(a) a median particle size d50 [mass percent] determined by sedimentation technique of below 2.0 μm, more preferably of equal or below 1.8 μm, yet more preferably in the range of 0.5 to 1.5 μm, still more preferably in the range of 0.5 to 1.3 μm,
and/or
(b) a cutoff particle size d95 [mass percent] determined by sedimentation technique of below 10.0 μm, more preferably of equal or below 8.0 μm, yet more preferably in the range of 0.8 to 6.0 μm, like in the range of 1.0 to 4.0 μm.

Preferably not only the particle size of the first mineral filler (F1) is lower compared to the second mineral filler (F2) but also its specific surface area. Accordingly in a specific embodiment the first mineral filler (F1) has a lower specific surface area measured according to DIN 66131/2 compared to the specific surface area measured according to DIN 66131/2 of the mineral filler (F2). Still more preferred the first mineral filler (F1) has a specific surface area measured according to DIN 66131/2 of below 20.0 $m^2/g$, more preferably below 18.0 $m^2/g$, yet more preferably below 16.0 $m^2/g$, like in the range of 10.0 to 18.0 $m^2/g$ or 10.0 to 16.0 $m^2/g$.

Finally the first mineral filler (F1) has no specific aspect ratio, i.e. is featured by a rather low aspect ratio. As defined in detail below the aspect ratio can be inter alia expressed by the lamellarity index (LI). Accordingly it is preferred that the first mineral filler (F1) has lower lamillarity index (LI) as the second mineral filler (F2). Accordingly it is appreciated that the first mineral filler (F1) has a lamellarity index (LI) of below 3.90, more preferably of below 3.50, still more preferably of below 3.10, yet more preferably in the range of 1.50 to 3.50, like in the range of 1.50 to 3.10.

Essential feature of the second mineral filler (F2) is its high aspect ratio. In the present application the lamellarity index (LI) is used to express the aspect ratio, as the lamellarity index (LI) characterizes the flatness (large dimension/ thickness) of a mineral filler. The lamellarity index (LI) is defined throughout the present invention by formula (I)

$$\frac{d50(L) - d50\,(S)}{d50\,(S)} \qquad \text{(I)}$$

wherein

d50 (L) is the median particle size d50 [mass percent] determined by laser diffraction technique, and

d50 (S) is the median particle size d50 [mass percent] determined by sedimentation technique.

Accordingly the lamellarity index (LI) of the second mineral filler (F2) is more than 2.90, more preferably of at least 3.10, yet more preferably of at least 3.50, still more preferably of at least 3.90, still yet more preferably in the range of 3.50 to 9.00, like 4.10 to 7.00.

As stated above it is appreciated that the first mineral filler (F1) and the second mineral filler (F2) differ in the particle size and/or surface area.

Accordingly it is appreciated that the second mineral filler (F2) has

(a) a median particle size d50 [mass percent] determined by sedimentation technique of equal or more than 1.0 μm, more preferably of equal or more than 1.5 μm, yet more preferably in the range of 1.0 to 5.0 μm, still more

preferably in the range of 1.8 to 4.0 μm, like in the range of 1.8 to 3.0 μm,
and/or
(b) a cutoff particle size d95 [mass percent] determined by sedimentation technique of equal or more than 3.5 μm, more preferably of equal or more than 7.0 μm, yet more preferably in the range of 5.0 to 20.0 μm, like in the range of 6.0 to 14.0 μm.

Moreover it is appreciated that the second mineral filler (F2) has a rather high specific surface area. Accordingly it is appreciated that the particle size measured according to DIN 66131/2 of the second mineral filler (F2) is equal or more than 10 $m^2/g$, more preferably in the range of 12.0 to 22.0 $m^2/g$, like in the range of 14.0 to 20.0 $m^2/g$.
The mineral fillers (F1) and (F2) are phyllosilicates preferably the mineral fillers (F1) and (F2) are talc (T1) and (T2), respectively.
A specific finding of the present invention is that especially good results are achieved in case the mineral fillers (F1) and (F2) are present in different amounts. Accordingly it is appreciated that the weight ratio of the mineral filler (F1) to the mineral filler (F2) [F1/F2] is in the range of

(i) 10/90 to below 30/70, i.e. 10/90 to 29/71, more preferably 15/85 to 28/72, still more preferably 20/80 to 27/73, or
(ii) more than 70/30 to 90/10, i.e. 71/29 to 90/10, more preferably 72/28 to 85/15, still more preferably 73/27 to 80/20.

In an specific embodiment the weight ratio of the mineral filler (F1) to the mineral filler (F2) [F1/F2] is in the range of 10/90 to below 30/70, i.e. 10/90 to 29/71, more preferably 15/85 to 28/72, still more preferably 20/80 to 27/73.
Further the amount of the mineral fillers (F1) and (F2) together within the polypropylene composition of the instant invention is preferably in the range of 5 to 30 wt.-%, more preferably in the range of 9 to 25 wt.-%, still more preferably in the range of 12 to 25 wt.-%.
The mineral fillers (F1) and (F2) as defined above can be used in any polypropylene composition. Accordingly the polypropylene (PP) can be a propylene homopolymer (H-PP), a random propylene copolymer (R-PP) or a heterophasic propylene copolymer (HECO). However, especially good results are achievable in case the polypropylene (PP) is a heterophasic propylene copolymer (HECO). The expression "heterophasic" indicates that an elastomeric copolymer, preferably an elastomeric propylene copolymer, is (finely) dispersed in a matrix. In other words the elastomeric copolymer forms inclusions in the matrix. Thus the matrix contains (finely) dispersed inclusions being not part of the matrix and said inclusions contain the elastomeric copolymer. The term "inclusion" according to this invention shall preferably indicate that the matrix and the inclusion form different phases within the heterophasic propylene copolymer, said inclusions are for instance visible by high resolution microscopy, like electron microscopy or scanning force microscopy.
Preferably the polypropylene (PP) is the heterophasic propylene copolymer (HECO) as defined in detail below.
Additionally to the polypropylene (PP), i.e. to the heterophasic propylene copolymer (HECO), like to the heterophasic propylene copolymer (HECO) as defined below, plastomer(s) (P) being no elastomeric propylene copolymers can be present in addition to the polypropylene (PP) within the polypropylene composition. Accordingly it is preferred that the polypropylene (PP) (i.e. the heterophasic propylene copolymer (HECO), and optionally the plastomer(s) (P) is/are the only polymer component(s) within the polypropylene composition, i.e. no other polymer components are present.
The polypropylene (PP) is a typical material used in this technical field, in particular in the field of automobile industry. Accordingly the polypropylene (PP) is preferably a heterophasic propylene copolymer (HECO). The heterophasic propylene copolymer (HECO) according to this invention has preferably a melt flow rate $MFR_2$ (230 °C) measured according to ISO 1133 in the range of 3.0 to 120.0 g/10min, more preferably in the range of 10.0 to 100.0 g/10min.
The heterophasic propylene copolymer (HECO) according to this invention preferably comprises

(a) a polypropylene matrix (M-PP) and
(b) an elastomeric propylene copolymer (E-PP) comprising units derived from

- propylene and
- ethylene and/or $C_4$ to $C_{12}$ $\alpha$-olefin.

Preferably the propylene content in the heterophasic propylene copolymer (HECO) is 70.0 to 92.0 wt.-%, more preferably 75.0 to 90.0 wt.-%, based on the total heterophasic propylene copolymer (HECO), more preferably based on the amount of the polymer components of the heterophasic propylene copolymer (HECO), yet more preferably based on the amount of the polypropylene matrix (M-PP) and the elastomeric propylene copolymer (E-PP) together. The remaining part constitutes the comonomers, preferably ethylene.
As defined herein a heterophasic propylene copolymer (HECO) comprises as polymer components only the polypropylene matrix (M-PP) and the elastomeric copolymer (E-PP). In other words the heterophasic propylene copolymer

(HECO) may contain further additives but no other polymer in an amount exceeding 5 wt-%, more preferably exceeding 3 wt.-%, like exceeding 1 wt.-%, based on the total heterophasic propylene copolymer (HECO), more preferably based on the polymers present in the heterophasic propylene copolymer (HECO). One additional polymer which may be present in such low amounts is a polyethylene which is a reaction product obtained by the preparation of the heterophasic propylene copolymer (HECO). Accordingly it is in particular appreciated that a heterophasic propylene copolymer (HECO) as defined in the instant invention contains only a polypropylene matrix (M-PP), an elastomeric propylene copolymer (E-PP) and optionally a polyethylene in amounts as mentioned in this paragraph. Further, throughout the present invention the xylene cold insoluble (XCI) fraction represents the polypropylene matrix (M-PP) and optionally the polyethylene of the heterophasic propylene copolymer (HECO) whereas the xylene cold soluble (XCS) fraction represents the elastomeric part of the heterophasic propylene copolymer (HECO), i.e. the elastomeric propylene copolymer (E-PP).

Accordingly the polypropylene matrix (M-PP) content, i.e. the xylene cold insoluble (XCI) content, in the heterophasic propylene copolymer (HECO) is preferably in the range of 50.0 to 80.0 wt.-%, more preferably in the range of 55.0 to 78.0 wt.-%. In case polyethylene is present in the heterophasic propylene copolymer (HECO), the values for the polypropylene matrix (M-PP) content but not for the xylene cold insoluble (XCI) content may be a bit decreased.

On the other hand the elastomeric propylene copolymer (E-PP) content, i.e. the xylene cold soluble (XCS) content, in the heterophasic propylene copolymer (HECO) is preferably in the range of 20.0 to 50.0 wt.-%, more preferably in the range of 22.0 to 45.0 wt.-%.

The polypropylene matrix (M-PP) is preferably a random propylene copolymer (R-PP) or a propylene homopolymer (H-PP), the latter especially preferred.

Accordingly the comonomer content of the polypropylene matrix (M-PP) is equal or below 1.0 wt.-%, yet more preferably not more than 0.8 wt.-%, still more preferably not more than 0.5 wt.-%, like not more than 0.2 wt.-%.

As mentioned above the polypropylene matrix (M-PP) is preferably a propylene homopolymer (H-PP).

The expression propylene homopolymer used in the instant invention relates to a polypropylene that consists substantially, i.e. of more than 99.7 wt.-%, still more preferably of at least 99.8 wt.-%, of propylene units. In a preferred embodiment only propylene units in the propylene homopolymer are detectable. The comonomer content can be determined with FT infrared spectroscopy, as described below in the examples.

In case the polypropylene matrix (M-PP) is a random propylene copolymer (R-PP) it is appreciated that the random propylene copolymer (R-PP) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP) according to this invention comprises, especially consists of, monomers copolymerizable with propylene from the group consisting of ethylene, 1-butene and 1-hexene. More specifically the random propylene copolymer (R-PP) of this invention comprises - apart from propylene - units derivable from ethylene and/or 1-butene. In a preferred embodiment the random propylene copolymer (R-PP) comprises units derivable from ethylene and propylene only.

Additionally it is appreciated that the random propylene copolymer (R-PP) has preferably a comonomer content in the range of more than 0.3 to 1.0 wt.-%, more preferably in the range of more than 0.3 to 0.8 wt.-%, yet more preferably in the range of more than 0.3 to 0.7 wt.-%.

The term "random" indicates that the comonomers of the random propylene copolymers (R-PP) and (R-PP) are randomly distributed within the propylene copolymers. The term random is understood according to IUPAC (Glossary of basic terms in polymer science; IUPAC recommendations 1996).

The polypropylene matrix (M-PP) of the heterophasic propylene copolymer (HECO), preferably the polypropylene matrix (M-PP) being the propylene homopolymer (H-PP), can be multimodal or bimodal in view of the molecular weight.

The expression "multimodal" or "bimodal" used throughout the present invention refers to the modality of the polymer, i.e.

- ■ the form of its molecular weight distribution curve, which is the graph of the molecular weight fraction as a function of its molecular weight,
  and / or
- ■ the form of its comonomer content distribution curve, which is the graph of the comonomer content as a function of the molecular weight of the polymer fractions.

As will be explained below, the heterophasic propylene copolymer (HECO) as well as its individual components (matrix and elastomeric copolymer) can be produced by blending different polymer types, i.e. of different molecular weight and/or comonomer content. However, it is preferred that the heterophasic propylene copolymer as well as its individual components (matrix and elastomeric copolymer) are produced in a sequential step process, using reactors in serial configuration and operating at different reaction conditions. As a consequence, each fraction prepared in a specific reactor will have its own molecular weight distribution and/or comonomer content distribution.

Further it is appreciated that the polypropylene matrix (M-PP) of the heterophasic propylene copolymer (HECO) has a moderate to high melt flow $MFR_2$ (230 °C). As stated above the xylene cold insoluble (XCI) fraction of a heterophasic propylene copolymer is essentially identical with the matrix of said heterophasic propylene copolymer. Accordingly the melt flow rate $MFR_2$ (230 °C) of the polypropylene matrix (M-PP) equates with the melt flow rate $MFR_2$ (230 °C) of the xylene cold insoluble (XCI) fraction of the heterophasic propylene copolymer (HECO). Accordingly, it is preferred that the xylene cold insoluble (XCI) fraction of the heterophasic propylene copolymer (HECO) has a melt flow rate $MFR_2$ (230 °C) measured according to ISO 1133 of 10.0 to 500.0 g/10min, more preferably of 20.0 to 400.0 g/10min, still more preferably of 30.0 to 300.0 g/10 min.

Preferably the polypropylene matrix (M-PP) is isotactic. Accordingly it is appreciated that the polypropylene matrix (M-PP) has a rather high pentad concentration, i.e. higher than 80 %, more preferably higher than 85 %, yet more preferably higher than 90 %, still more preferably higher than 92 %, still yet more preferably higher than 93 %, like higher than 95%.

The second component of the heterophasic propylene copolymer (HECO) is the elastomeric propylene copolymer (E-PP).

The elastomeric propylene copolymer (E-PP) comprises, preferably consists of, units derivable from (i) propylene and (ii) ethylene and/or at least another $C_4$ to $C_{12}$ $\alpha$-olefin, like $C_4$ to $C_{10}$ $\alpha$-olefin, more preferably units derivable from (i) propylene and (ii) ethylene and at least another $\alpha$-olefin selected form the group consisting of 1-butene, 1-pentene, 1-hexene, 1-heptene and 1-octene. The elastomeric propylene copolymer (E-PP) may additionally contain units derived from a conjugated diene, like butadiene, or a non-conjugated diene, however, it is preferred that the elastomeric propylene copolymer (E-PP) consists of units derivable from (i) propylene and (ii) ethylene and/or $C_4$ to $C_{12}$ $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric propylene copolymer (E-PP) comprises at least units derivable from propylene and ethylene and may comprise other units derivable from a further $\alpha$-olefin as defined in the previous paragraph. However, it is in particular preferred that elastomeric propylene copolymer (E-PP) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM) and/or an ethylene propylene rubber (EPR) as elastomeric propylene copolymer (E-PP) is especially preferred, the latter most preferred.

Like the polypropylene matrix (M-PP) the elastomeric propylene copolymer (E-PP) can be unimodal or multimodal, like bimodal, the latter being preferred. Concerning the definition of unimodal and multimodal, like bimodal, it is referred to the definition above.

In the present invention the content of units derivable from propylene in the elastomeric propylene copolymer (E-PP) equates with the content of propylene detectable in the xylene cold soluble (XCS) fraction. Accordingly the propylene detectable in the xylene cold soluble (XCS) fraction ranges from 40.0 to 75.0 wt.-%, more preferably 45.0 to 70.0 wt.-%. Thus in a specific embodiment the elastomeric propylene copolymer (E-PP), i.e. the xylene cold soluble (XCS) fraction, comprises from 25.0 to 60.0 wt.-%, more preferably 30.0 to 55.0 wt.-%, units derivable from comonomers other than propylene, like ethylene. Preferably the elastomeric propylene copolymer (E-PP) is an ethylene propylene non-conjugated diene monomer polymer (EPDM) or an ethylene propylene rubber (EPR), the latter especially preferred, with a propylene and/or ethylene content as defined in this paragraph.

A further preferred requirement of the present invention is that the intrinsic viscosity (IV) of the xylene cold soluble (XCS) fraction of the heterophasic propylene copolymer (HECO) is rather high. Rather high values of intrinsic viscosity (IV) improve the impact strength. Accordingly it is appreciated that the intrinsic viscosity of the xylene cold soluble (XCS) fraction of the heterophasic propylene copolymer (HECO) is above 2.0 dl/g, more preferably at least 2.3 dl/g. On the other hand the intrinsic viscosity (IV) should be not too high otherwise the flowability is decreased. Thus the intrinsic viscosity of the xylene cold soluble (XCS) fraction of the heterophasic propylene copolymer (HECO) is preferably in the range of 2.0 to 4.5 dl/g, more preferably in the range 2.3 to 4.1 dl/g. The intrinsic viscosity is measured according to ISO 1628 in decaline at 135 °C.

Preferably the heterophasic propylene copolymer (HECO) is $\alpha$-nucleated. Examples of suitable $\alpha$-nucleating agents are inorganic additives such as salts of monocarboxylic or polycarboxylic acids, e. g. sodium benzoate or aluminum

tert-butylbenzoate, dibenzylidenesorbitol or its $C_1$-$C_8$-alkyl-substituted derivatives such as methyldibenzylidenesorbitol, ethyldibenzylidenesorbitol or dimethyidibenzylidenesorbitol or salts of diesters of phosphoric acid, e. g. sodium 2, 2'-methylenebis (4, 6,-di-tert-butylphenyl) phosphate or nonitol derivatives like 1,2,3-trideoxy-4,6:5,7-bis-O[(4-propylphenyl)methylene]-nonitol.

Accordingly preferred $\alpha$-nucleating agents are selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer.

The nucleating agent content of the heterophasic propylene copolymer (HECO) is preferably up to 1 wt.-%.

Such additives are generally commercially available and are described, for example, in Gachter/Muller, Plastics Additives Handbook, 4th Edition, Hansa Publishers, Munich, 1993.

In a preferred embodiment, the heterophasic propylene copolymer (HECO) of the present invention contain from 0.1 to 1 wt.-%, preferably from 0.15 to 0.25 wt.-%, of a nucleating agent, in particular salts of diesters of phosphoric acid, e.g. sodium 2,2'-methylenebis (4, 6,-di-tert-butylphenyl) phosphate or aluminium-hydroxy-bis[2,2'-methylene-bis (4,6-di-t-butylphenyl)phosphate]. In another preferred embodiment the heterophasic polypropylene (H-P) is $\alpha$-nucleated by polymerized vinyl compounds as mentioned below.

Additionally (a) plastomer(s) (P) can be present in the inventive polypropylene composition. The plastomer(s) (P) is/are (chemically) different to the elastomeric copolymers (E-PP) of the heterophasic systems discussed above. More precisely the plastomer(s) (P) is/are preferably selected from the group consisting of a low density polyethylene (density measured according to ISO 1183-187 in the range of more than 900 to below 940 kg/m$^3$, i.e. 910 to below 940 kg/m$^3$), a linear low density polyethylene (LLDPE) (density measured according to ISO 1183-187 in the range 820 to 900 kg/m$^3$), a high density polyethylene (HDPE) (density measured according to ISO 1183-187 of at least 940 kg/m$^3$), a styrenic block copolymer (SBC), and mixtures thereof. In one embodiment the inventive polypropylene composition comprises as plastomers (P) a linear low density polyethylene (LLDPE) and a high density polyethylene (HDPE), especially a linear low density polyethylene (LLDPE) and a high density polyethylene (HDPE) as defined below. In another preferred embodiment the inventive polypropylene composition comprises as plastomers (P) a linear low density polyethylene (LLDPE), especially a linear low density polyethylene (LLDPE) as defined below, only.

The linear low density polyethylene (LLDPE), has preferably a density measured according to ISO 1183-187 in the range 820 to 900 kg/m$^3$, more preferably in the range of 850 to 900 kg/m$^3$, yet more preferably in the range of 840 to 880 kg/m$^3$, like in the range of 860 to 885 kg/m$^3$.

Preferably the linear low density polyethylene (LLDPE), is featured by a specific melt flow rate, namely by a melt flow rate $MFR_2$ (190 °C) measured according to ISO 1133 in the range of 0.5 to 40.0 g/10min, more preferably in the range of 0.5 to 30.0 g/10min.

In a preferred embodiment the linear low density polyethylene (LLDPE), is a copolymer containing as a major part units derivable from ethylene. Accordingly it is appreciated that the linear low density polyethylene (LLDPE) comprises at least 50.0 wt.-% units derivable from ethylene, more preferably at least 55.0 wt.-% of units derived from ethylene. Thus it is appreciated that the linear low density polyethylene (LLDPE) comprises 50.0 to 70.0 wt.-%, more preferably 55.0 to 65 wt.-%, units derivable from ethylene. The comonomers present in the linear low density polyethylene (LLDPE), are C4 to C20 $\alpha$-olefins, like 1-butene, 1-hexene and 1-octene, the latter especially preferred. Accordingly in one specific embodiment the linear low density polyethylene (LLDPE) is an ethylene-1-octene polymer with the amounts given in this paragraph.

The high density polyethylene (HDPE) - if present - has preferably a density measured according to ISO 1183-187 of at least 940 kg/m$^3$, more preferably of at least 955 kg/m$^3$, yet more preferably in the range of 940 to 975 kg/m$^3$, still yet more preferably in the range of 950 to 968 kg/m$^3$, like 955 to 966 kg/m$^3$.

Preferably the high density polyethylene (HDPE) has a melt flow rate $MFR_2$ (190 °C) of 5.0 to 30 g/10min, more preferably of 1.0 to 20.0 g/10min, like 2.0 to 15.0 g/10min.

As stated above the instant polypropylene composition shall be especially featured by good flowability. Thus it is preferred that the polypropylene composition has an $MFR_2$ (230 °C) in a range of 5.0 to 80.0 g/10 min, preferably of 10.0 to 70.0 g/10 min, more preferably of 15.0 to 60.0g/10 min.

The instant composition may additional contain other additives than the mineral fillers (F1) and (F2). For instance it is appreciated that the composition comprises acid scavengers (AS), antioxidants (AO), nucleating agents (NA), hindered amine light stabilizers (HALS), slip agents (SA), and pigments. Preferably the amount of additives excluding

the mineral filler (F) shall not exceed 7 wt.-%, more preferably shall not exceed 5 wt.-%, like not more than 3.5 wt.-%, within the instant composition.

In the following preferred additives are listed.

A preferred acid scavenger (AS) is Ca-stearate.

As antioxidants (AO) preferably phenolic antioxidant and/or phosphorous antioxidant shall be present in the inventive composition.

More preferably the phenolic antioxidant is selected from the group consisting of pentaerythrityl-tetrakis (3-(3,5-di-tert-butyl-4-hydroxyphenyl) propionate (CAS no. 6683-19-8; 1178 g/mol),
octadecyl 3-(3',5'-di-tert-butyl-4-hydroxyphenyl)propionate (CAS no. 2082-79-3; 531 g/mol)
bis(3,3-bis(3'-tert-butyl-4'-hydroxyphenyl)butanic acid) glycolester (CAS no. 32509-66-3; 794 g/mol),
3,3'-Bis(3,5-di-tert-butyl-4-hydroxyphenyl)-N,N'-hexamethylenedipropionamide (CAS no. 23128-74-7; 637 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; 741 g/mol), 1,6-hexanediyl-bis(3,5-bis(1,1dimethylethyl)-4-hydroxybenzene)propanoate) (CAS no. 35074-77-2; 639 g/mol),
triethylenglycol-bis-(3-tert-butyl-4-hydroxy-5-methylphenyl) propionate (CAS no. 36443-68-2; 587 g/mol),
a mixture of C13 to C15 linear and branched alkyl esters of 3-(3',5'-di-t-butyl-4'-hydroxyphenyl) propionic acid (CAS no. 171090-93-0; 485 g/mol), and benzenepropanoic acid, 3,5-bis(1,1-dimehtyl-ethyl)-4-hydroxy-,C7-C9-branched and linear alkyl esters (CAS no. 125643-61-0; 399 g/mol),

The most preferred phenolic antioxidant is pentaerythrityl-tetrakis (3-(3,5-di-tert-butyl-4-hydroxyphenyl) propionate (CAS no. 6683-19-8; 1178 g/mol).

The preferred phosphorous antioxidant is selected from the group consisting of tris-(2,4-di-tert-butylphenyl) phosphite (CAS no. 31570-04-4; 647 g/mol), tetrakis-(2,4-di-tert-butylphenyl)-4,4'-biphenylen-di-phosphonite (CAS no. 38613-77-3; 991 g/mol),
bis-(2,4-di-tert-butylphenyl)-pentaerythrityl-di-phosphite (CAS no. 26741-53-7; 604 g/mol), di-stearyl- pentaerythrityl-di-phosphite (CAS no. 3806-34-6; $M_w$ 733 g/mol), tris-nonylphenyl phosphite (CAS no. 26523-78-4; 689 g/mol),
bis(2,6-di-tert-butyl-4-methylphenyl)pentaerythrityl-di-phosphite (CAS no. 80693-00-1; 633 g/mol),
2,2'-methylenebis (4,6-di-tert-butylphenyl) octyl-phosphite (CAS no. 126050-54-2; 583 g/mol),
1,1,3-tris (2-methyl-4-ditridecyl phosphite-5-tert-butylphenyl) butane (CAS no. 68958-97-4; 1831 g/mol),
4,4'-butylidenebis (3-methyl-6-tert-butylphenyl-di-tridecyl) phosphite (CAS no. 13003-12-8; 1240 g/mol),
bis-(2,4-dicumylphenyl)pentaerythritol diposphite (CAS no. 154862-43-8; 852 g/mol), bis(2-methyl-4,6-bis(1,1-dmethylethyl) phenyl) phosphorous acid ethylester (CAS no. 145650-60-8; 514 g/mol),
2,2',2"-nitrilo triethyl-tris(3,3',5,5'-tetra-tert-butyl-1,1'-biphenyl-2,2'-diyl)phosphite) (CAS no. 80410-33-9; 1465 g/mol)
2,4,6-Tris(tert-butyl)phenyl-2-butyl-2-ethyl-1,3-propandiolphosphit (CAS no. 161717-32-4, 450 g/mol),
2,2'-Ethyliden-bis(4,6-di-tert-butylphenyl)fluorphosphonit (CAS no. 118337-09-0; 487 g/mol),
6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; 660 g/mol), tetrakis-(2,4-di-tert-butyl-5-methylphenyl)-4,4'-biphenylen-di-phosphite (CAS no. 147192-62-9; 1092 g/mol), and
1,3-bis-(diphenylphosphino)-2,2-dimethylpropane (CAS no. 80326-98-3; 440.5 g/mol).

The most preferred phosphorous antioxidant is tris-(2,4-di-tert-butylphenyl) phosphite (CAS no. 31570-04-4; 647 g/mol).

Hindered amine light stabilizers (HALS) are known in the art. Preferably such hindered amine light stabilizers are 2,6-alkyl-piperidine derivatives in particular 2,2,6,6-tetramethylpiperidine derivatives.

Accordingly the hindered amine light stabilizer is preferably selected from the group consisting of
bis-(2,2,6,6-tetramethyl-4-piperidyl) sebacate (CAS no. 52829-07-9; 481 g/mol), bis-(1,2,2,6,6-pentamethyl-4-piperidyl) sebacate (CAS no. 41556-26-7; 509 g/mol),
tetrakis (2,2,6,6-tetramethyl-4-piperidyl)-1,2,3,4-butane tetracarboxylate (CAS no. 64022-61-3; 792 g/mol),
tetrakis (1,2,2,6,6-pentamethyl-4-piperidyl)-1,2,3,4-butane tetracarboxylate (CAS no. 91788-83-9; 847 g/mol),
1,2,3-tris (1,2,2,6,6-pentamethyl-4-piperidyl)-4-tridecyl butane-1,2,3,4-tetracarboxylate (CAS no. 84696-72-0; 900 g/mol),
1,2,3-tris (2,2,6,6-tetramethyl-4-piperidyl)-4-tridecyl butane-1,2,3,4-tetracarboxylate (CAS no. 84696-71-9; 900 g/mol),
N,N'-bisformyl-N,N'-bis-(2,2,6,6-tetramethyl-4-piperidinyl)-hexamethylendiamine (CAS no. 124172-53-8; 450 g/mol),
1,3,5-triazine-2,4,6-triamine, $N_5N'''$-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6; 2286 g/mol), and bis-(1-octyloxy-2,2,6,6-tetramethyl-4-piperidinyl) sebacate (CAS no. 129757-67-1; 737 g/mol).

In case a nucleating agent (NA) is used it is preferably an $\alpha$-nucleating agent. Even more preferred the present invention is free of $\beta$-nucleating agents. According to the present invention the nucleating agent (NA) is understood as a nucleating agent different to the mineral filler (F). Accordingly the nucleating agent (NA) is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer.

It is especially preferred that the nucleating agent (NA) is sodium 2,2'-methylene bis (4, 6,-di-tert-butylphenyl) phosphate.

A preferred slip agent is for instance a fatty acid amide. Preferably the amount of carbon atoms of the fatty acid is preferably in the range of $C_{10}$ to $C_{25}$ carbon atoms.

Accordingly the slip agent (SA) is preferably selected from the group consisting of cis-13-docosenoic amide (CAS no. 112-84-5; 337.6 g/mol),
cis-9,10 octadecenoamide (CAS no. 301-02-0; 281.5 g/mol)
octadecanoylamide (CAS no. 124-26-5; 283.5 g/mol),
behenamide (CAS no. 3061-75-4; 339.5 g/mol),
N,N'-ethylene-bis-stearamide (CAS no. 110-30-5; 588 g/mol),
N-octadecyl-13-docosenamide (CAS no. 10094-45-8; 590 g/mol), and
oleylpalmitamide (CAS no. 16260-09-6; 503 g/mol).

Especially suitable is cis-13-docosenoic amide (CAS no. 112-84-5; 337.6 g/mol) and/or cis-9-octadecenamide (CAS no. 301-02-0; 281.5 g/mol).

Very good results are achievable in case the amount of the individual components is additionally considered. Accordingly it is preferred that the polypropylene composition comprises

- at least 20 wt.-%, more preferably 40 to 80 wt.-%, preferably 55 to 75 wt.-%, of the polypropylene (PP), i.e. the heterophasic propylene copolymer (HECO),
- optionally 0 to 25 wt.-%, preferably 5 to 25 wt.-%, more preferably 10 to 20 wt.-%, of plastomer(s) (P),
- 6 to 30 wt.-%, preferably 8 to 28 wt.-%, more preferably 12 to 26 wt.-%, of mineral filler (F), i.e. of mineral filler (F1) and (F2) together,

based on the total amount of the composition, more preferably based on the total amount of the polypropylene (PP), the plastomer(s) (P) and the mineral fillers (F1) and (F2) together.

All components used for the preparation of the instant composition are known. Accordingly also their preparation is well known. For instance the heterophasic polypropylene (HECO) according to this invention is preferably produced in a multistage process known in the art, wherein the matrix is produced at least in one slurry reactor and subsequently the elastomeric copolymer is produced at least in one gas phase reactor.

Thus, the polymerization system can comprise one or more conventional stirred slurry reactors and/or one or more gas phase reactors. Preferably the reactors used are selected from the group of loop and gas phase reactors and, in particular, the process employs at least one loop reactor and at least one gas phase reactor. It is also possible to use several reactors of each type, e.g. one loop and two or three gas phase reactors, or two loops and one or two gas phase reactors, in series.

Preferably the process comprises also a prepolymerisation with the chosen catalyst system, as described in detail below, comprising the Ziegler-Natta procatalyst, the external donor and the cocatalyst.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerization stages. Also in such cases it is necessary to introduce so much cocatalyst into the prepolymerisation stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic

additive may be used to prevent the particles from adhering to each other or to the walls of the reactor.

The precise control of the prepolymerization conditions and reaction parameters is within the skill of the art.

A slurry reactor designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises a bulk loop reactor.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment for the preparation of the heterophasic polypropylenes of the invention comprises carrying out the polymerization in a process comprising either a combination of one loop and one or two gas phase reactors or a combination of two loops and one or two gas phase reactors.

A preferred multistage process is a slurry-gas phase process, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315. They are incorporated herein by reference.

A further suitable slurry-gas phase process is the Spheripol® process of Basell.

Preferably the heterophasic polypropylene composition according to this invention are produced by using a special Ziegler-Natta procatalyst in combination with a special external donor, as described below in detail, preferably in the Spheripol® or in the Borstar®-PP process.

One preferred multistage process may therefore comprise the steps of:

- producing a polypropylene matrix in the presence of the chosen catalyst system, as for instance described in detail below, comprising the special Ziegler-Natta procatalyst (i), an external donor (iii) and the cocatalyst (ii) in a first slurry reactor and optionally in a second slurry reactor, both slurry reactors using the same polymerization conditions,
- transferring the slurry reactor product into at least one first gas phase reactor, like one gas phase reactor or a first and a second gas phase reactor connected in series,
- producing an elastomeric copolymer in the presence of the polypropylene matrix and in the presence of the catalyst system in said at least first gas phase reactor,
- recovering the polymer product for further processing.

With respect to the above-mentioned preferred slurry-gas phase process, the following general information can be provided with respect to the process conditions.

Temperature is preferably from 40 to 110°C, preferably between 50 and 100°C, in particular between 60 and 90°C, with a pressure in the range of from 20 to 80 bar, preferably 30 to 60 bar, with the option of adding hydrogen in order to control the molecular weight in a manner known per se.

The reaction product of the slurry polymerization, which preferably is carried out in a loop reactor, is then transferred to the subsequent gas phase reactor(s), wherein the temperature preferably is within the range of from 50 to 130°C, more preferably 60 to 100°C, at a pressure in the range of from 5 to 50 bar, preferably 8 to 35 bar, again with the option of adding hydrogen in order to control the molecular weight in a manner known per se.

The average residence time can vary in the reactor zones identified above. In one embodiment, the average residence time in the slurry reactor, for example a loop reactor, is in the range of from 0.5 to 5 hours, for example 0.5 to 2 hours, while the average residence time in the gas phase reactor generally will be from 1 to 8 hours.

If desired, the polymerization may be effected in a known manner under supercritical conditions in the slurry, preferably loop reactor, and/or as a condensed mode in the gas phase reactor.

According to the invention the heterophasic polypropylenes are preferably obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (I)

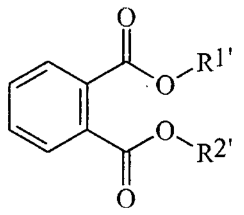

(I)

wherein $R^1$ and $R^{2'}$ are independently at least a $C_5$ alkyl

under conditions where a transesterification between said $C_1$ to $C_2$ alcohol and said dialkylphthalate of formula (I) takes place to form the internal donor

c) washing the product of stage b) or

d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R^{1'}$ and $R^{2'}$ being independently at least a $C_5$-alkyl, like at least a $C_8$-alkyl, or preferably

  (ii) a dialkylphthalate of formula (I) with $R^{1'}$ and $R^{2'}$ being the same and being at least a $C_5$-alkyl, like at least a $C_8$-alkyl,

  or more preferably

  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

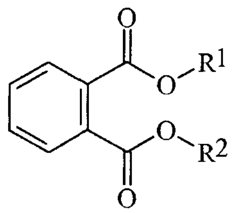

(II)

  with $R^1$ and $R^2$ being methyl or ethyl, preferably ethyl,

  the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the

present invention as described in WO 92/19658 and WO 92/19653. As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BC-1 catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from Grace.

In a further embodiment, the Ziegler-Natta procatalyst can be modified by polymerising a vinyl compound in the presence of the catalyst system, comprising the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic polypropylene composition according to this invention. The polymerized vinyl compound can act as an $\alpha$-nucleating agent. This modification is in particular used for the preparation of the heterophasic polypropylene (H-PP1).

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

For the production of the heterophasic polypropylenes according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (III)

$$Si(OCH_3)_2R_2^5 \qquad \text{(III)}$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, isobutyl, iso-pentyl, tert.-butyl, tert.-amyl, neopentyl, cyclopentyl, cyclohexyl, methylcyclopentyl and cycloheptyl.

More preferably the external donor is either dicyclopentyl dimethoxy silane [$Si(OCH_3)_2$(cyclo-pentyl)$_2$] or diisopropyl dimethoxy silane [$Si(OCH_3)_2(CH(CH_3)_2)_2$].

For mixing the individual components of the instant composition, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive composition.

Accordingly the present invention is also directed to a process for the preparation of the instant composition comprising the steps of adding the polymer components, inter alia the polypropylene (PP), with the mineral fillers (F1) and (F2), and optionally other additives to an extruder (as mentioned above) and extruding the same obtaining thereby said polypropylene composition.

The polypropylene composition according to the invention may be pelletized and compounded using any of the variety of compounding and blending methods well known and commonly used in the resin compounding art.

The polypropylene composition of the present invention is preferably used for the production of automotive articles, like moulded automotive articles, preferably automotive injection moulded articles. Even more preferred is the use for the production of car interiors and exteriors, like bumpers, side trims, step assists, body panels, spoilers, dashboards, interior trims and the like.

The current invention also provides (automotive) articles, like injection molded articles, comprising at least to 60 wt.-%, more preferably at least 80 wt.-%, yet more preferably at least 95 wt.-%, like consisting, of the inventive

polypropylene composition. Accordingly the present invention is especially directed to automotive articles, especially to car interiors and exteriors, like bumpers, side trims, step assists, body panels, spoilers, dashboards, interior trims and the like, comprising at least to 60 wt.-%, more preferably at least 80 wt.-%, yet more preferably at least 95 wt.-%, like consisting, of the inventive polypropylene composition.

The present invention will now be described in further detail by the examples provided below.

## EXAMPLES

### 1. Definitions/Measuring Methods

The following definitions of terms and determination methods apply for the above general description of the invention as well as to the below examples unless otherwise defined.

**NMR-spectroscopy measurements:**

The $^{13}$C-NMR spectra of polypropylenes were recorded on Bruker 400MHz spectrometer at 130 °C from samples dissolved in 1,2,4-trichlorobenzene/benzene-d6 (90/10 w/w). For the triad analysis the assignment is done according to the methods described in literature: (T. Hayashi, Y. Inoue, R. Chüjö, and T. Asakura, Polymer 29 138-43 (1988).and Chujo R, et al, Polymer 35 339 (1994).

The NMR-measurement was used for determining the mmmm pentad concentration in a manner well known in the art.

**Density** is measured according to ISO 1183-187. Sample preparation is done by compression moulding in accordance with ISO 1872-2:2007.

**$MFR_2$ (230 °C)** is measured according to ISO 1133 (230 °C, 2.16 kg load).

**$MFR_2$ (190 °C)** is measured according to ISO 1133 (190 °C, 2.16 kg load).

**Quantification of comonomer content by FTIR spectroscopy**

The comonomer content is determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of between 100-500 μm and spectra recorded in transmission mode. Specifically, the ethylene content of a polypropylene-co-ethylene copolymer is determined using the baseline corrected peak area of the quantitative bands found at 720-722 and 730-733 $cm^{-1}$. Quantitative results are obtained based upon reference to the film thickness. **Intrinsic viscosity** is measured according to DIN ISO 1628/1, October 1999 (in Decalin at 135 °C).

**Tensile Modulus** is measured according to ISO 527-2 (cross head speed = 50 mm/min; 23 °C) using injection molded specimens as described in EN ISO 1873-2 (dog bone shape, 4 mm thickness).

**Coefficient of linear thermal expansion:** The coefficient of linear thermal expansion (CLTE) was determined in accordance with ISO 11359-2:1999 on 10 mm long pieces cut from the same injection molded specimens as used for the flexural modulus determination. The measurement was performed in a temperature range from -30 to +80°C at a heating rate of 1 °C/min.

**Charpy impact test:** The Charpy notched impact strength (Charpy NIS) is measured according to ISO 179 2C / DIN 53453 at 23 °C, -20 °C and -30 °C, using injection molded bar test specimens of 80x10x4 $mm^3mm^3$ prepared in accordance with ISO 294-1:1996.

**The xylene cold solubles (XCS, wt.-%):** Content of Xylene solubles (XCS) is determined at 23 °C according ISO 6427.

**Median particle size d50 (Laser diffraction)** is calculated from the particle size distribution [mass percent] as determined by laser diffraction (Mastersizer) according to ISO 13320-1.

**Median particle size d50 (Sedimentation)** is calculated from the particle size distribution [mass percent] as determined by gravitational liquid sedimentation according to ISO 13317-3 (Sedigraph)

**Cutoff particle size d95 (Sedimentation)** is calculated from the particle size distribution [mass percent] as determined by gravitational liquid sedimentation according to ISO 13317-3 (Sedigraph)

**Specific surface area** is determined as the BET surface according to DIN 66131/2.

### 2. Examples

The catalyst used in the polymerization was a vinylcyclohexyl (VHC)-modified BC-1 catalyst from Borealis (prepared according to Example 1 of WO99/24479, with dioctylphthalate (DOP) as dialkylphthalat of the formula (I) and

ethanol as the alcohol), the cocatalyst was triethylaluminium (TEA) and as an external donor dicyclopentyl dimethoxy silane (donor D) was used.

**Table 1:** Preparation of heterophasic propylene copolymer (HECO)

| | | |
|---|---|---|
| **Loop** | | |
| A1/donor ratio | [mol/mol] | 50 |
| $MFR_2$ | [g/10 min] | 270 |
| XCS | [wt.-%] | 2.3 |
| **GPR 1** | | |
| $MFR_2$ | [g/10 min] | 175 |
| XCS | [wt.-%] | 2.0 |
| **GPR 2** | | |
| $MFR_2$ | [g/10 min] | 45.45 |
| XCS | [wt.-%] | 18.7 |
| Ethene of XCS | [wt.-%] | 36.5 |
| Viscosity of XCS | [dl/g] | 2.85 |
| Ethene content | [wt.-%] | 8.7 |
| C2/C3 ratio | [mol/kmol] | 521 |
| H2/C2 ratio | [mol/kmol] | 64 |
| **GPR 3** | | |
| Ethene content | [wt.-%] | 12.3 |
| XCS | [wt.-%] | 25.3 |
| C2/C3 ratio | [mol/kmol] | 506 |
| H2/C2 ratio | [mol/kmol] | 89 |
| **Product** | | |
| $MFR_2$ | [g/10 min] | 25 |
| PP Mixer XCS | [wt.-%] | 30.9 |
| ethene of XCS | [wt.-%] | 37.2 |
| viscosity of XCS | [dl/g] | 2.72 |
| ethene content | [wt.-%] | 13.3 |
| Tm | [°C] | 165.3 |
| Tc | [°C] | 129.3 |

Table 2: Compositions

| **Example*** | | **CE 1** | **CE 2** | **CE 3** | **E 1** | **E 2** |
|---|---|---|---|---|---|---|
| HECO | [wt%] | 67.3 | 67.3 | 67.3 | 67.3 | 67.3 |
| Plastomer | [wt%] | 10 | 10 | 10 | 10 | 10 |
| Talc 1 | [wt%] | - | 20 | 10 | 5 | 15 |
| Talc 2 | [wt%] | 20 | - | 10 | 15 | 5 |
| MFR | [g/10min] | 17.5 | 17.9 | 16.2 | 16.6 | 16.4 |

(continued)

| Example* | | CE 1 | CE 2 | CE 3 | E 1 | E 2 |
|---|---|---|---|---|---|---|
| Tensile Modulus | [MPa] | 1823 | 1645 | 1705 | 1645 | 1660 |
| Charpy. notched +23 °C | [kJ/m$^2$] | 50.2 | 50.1 | 47.5 | 57.9 | 56.2 |
| Charpy. notched -20°C | [kJ/m$^2$] | 9.5 | 8.2 | 7.7 | 12.8 | 10.7 |
| CLTE +23/80 | [10E-05 μm/mK] | 63 | 65 | 65 | 60 | 54 |

* Rest to 100 wt.-% are additives, like antioxidants and pigments (e.g. Carbon black)
**"Plastomer"** is the commercial product Engage 8130 of Dow Elastomers,
**"Talc 1"** is the commercial talc Jetfine 3CA of Luzenac having median particle size d50 of 1 μm (sedigraph) and 3.9 μm (laser), respectively, a cutoff particle size d95 of 3.3 μm (sedigraph) as well as a specific surface area of 14.5 m$^2$/g,
**"Talc 2"** is the commercial talc HAR T84 of Luzenac is having a median particle size d50 of 2 μm (sedigraph) and 11 μm (laser), respectively, a cutoff particle size d95 of 10 μm (sedigraph) as well as a specific surface area of 16 m$^2$/g.

## Claims

**1.** Polypropylene composition comprising polypropylene (PP) and at least two different mineral fillers (F1) and (F2), wherein

(a) the first mineral filler (F1) has a lower median particle size d50 [mass percent] determined by sedimentation technique compared to the median particle size d50 [mass percent] determined by sedimentation technique of the second mineral filler (F2), and
(b) the second mineral filler (F2) has a lamellarity index (LI) of more than 2.90, the lamellarity index is defined by formula (1)

$$\frac{d50(L) - d50(S)}{d50(S)} \qquad (I)$$

wherein

d50 (L) is the median particle size d50 [mass percent] determined by laser diffraction technique, and
d50 (S) is the median particle size d50 [mass percent] determined by sedimentation technique,

wherein further the weight ratio of the first mineral filler (F1) to the second mineral filler (F2) is in the range of

(i) 10/90 to below 30/70,
or
(ii) more than 70/30 to 90/10

and wherein the mineral fillers (F1) and (F2) are phyllosilicates.

**2.** Polypropylene composition according to claim 1, wherein

(a) the amount of the mineral fillers (F1) and (F2) together within the polypropylene composition is 5 to 30 wt.-%, and/or
(b) first mineral filler (F1) has a lower lamellarity index (LI) compared to the lamellarity index (LI) of the second mineral filler (F2).

**3.** Polypropylene composition according to claim 1 or 2, wherein

(a) the first mineral filler (F1) has a median particle size d50 [mass percent] determined by sedimentation technique of below 2.0 μm,

and/or
(b) the first mineral filler (F1) has a lower cutoff particle size d95 [mass percent] determined by sedimentation technique compared to the cutoff particle size d95 [mass percent] determined by sedimentation technique of the mineral filler (F2),
and/or
(c) the first mineral filler (F1) has a lower specific surface area measured according to DIN 66131/2 compared to the specific surface area measured according to DIN 66131/2 of the second mineral filler (F2).

**4.** Polypropylene composition according to any one of the preceding claims, wherein the first mineral filler (F1) has

(a) a median particle size d50 [mass percent] determined by sedimentation technique in the range of 0.5 to 1.5 $\mu$m,
and/or
(b) a cutoff particle size d95 [mass percent] determined by sedimentation technique of below 10.0 $\mu$m,
and/or
(c) a specific surface area measured according to DIN 66131/2 of below 20 $m^2$/g.

**5.** Polypropylene composition according to any one of the preceding claims, wherein the second mineral filler (F2) has

(a) a median particle size d50 [mass percent] determined by sedimentation technique of equal or more than 1.0 $\mu$m,
and/or
(b) a cutoffparticle size d95 [mass percent] determined by sedimentation technique of equal or more than 3.5 $\mu$m,
and/or
(c) a specific surface area measured according to DIN 66131/2 of equal or more than 10 $m^2$/g.

**6.** Polypropylene composition according to any one of the preceding claims, wherein the mineral fillers (F1) and (F2) are talc (T1) and talc (T2), respectively.

**7.** Polypropylene composition according to any one of the preceding claims, wherein the polypropylene (PP) is a heterophasic propylene copolymer (HECO) comprising a polypropylene matrix (M-PP) and an elastomeric propylene copolymer (E-PP), said elastomeric propylene copolymer (E-PP) comprises units derived from

(i) propylene and
(ii) ethylene and/or $C_4$ to $C_{12}$ $\alpha$-olefin.

**8.** Polypropylene composition according to any one of the preceding claims, wherein the polypropylene composition has a melt flow rate $MFR_2$ (230 °C) measured according to ISO 1133 in the range of 5 to 80 g/10min.

**9.** Polypropylene composition according to any one of the preceding claims, wherein the polypropylene composition comprises additionally plastomer(s) (P) being no elastomeric propylene copolymer.

**10.** Polypropylene composition according to claim 9, wherein the plastomer (P) is selected from the group consisting of a low density polyethylene, a linear low density polyethylene (LLDPE), a high density polyethylene (HDPE), a styrenic block copolymer (SBC), and mixtures thereof.

**11.** Polypropylene composition according to any one of the preceding claims, wherein heterophasic propylene copolymer (HECO) has

(a) a melt flow rate $MFR_2$ (230 °C) measured according to ISO 1133 in the range of 3 to 120 g/10min,
and/or
(b) a xylene cold soluble fraction (XCS) in the range of 20.0 to 50.0 wt.-%.

**12.** Polypropylene composition according to any one of the preceding claims, wherein heterophasic propylene copolymer (HECO) has

(a) a total propylene content 70.0 to 92.0 wt.-%,
and/or
(b) a propylene content in the xylene cold soluble (XCS) fraction of 40.0 to 75.0 wt.-%.

**13.** Polypropylene composition according to any one of the preceding claims, wherein the composition comprises

(a) at least 20 wt.-% of the polypropylene (PP),
(b) optionally 2 to 30 wt.-% of plastomer (P), and
(c) 5 to 30 wt.-% of the mineral fillers (F1) and (F2) together.

**14.** Automotive article comprising a composition according to any one of the preceding claims 1 to 13.

**15.** Use of the composition according to any one of the preceding claims 1 to 13 for automotive articles.

**Patentansprüche**

**1.** Polypropylen-Zusammensetzung, umfassend Polypropylen (PP) und mindestens zwei verschiedene Mineral-Füllstoffe (F1) und (F2), wobei

(a) der erste Mineral-Füllstoff (F1) eine geringere Median-Teilchengröße d50 [Masseprozent], bestimmt durch Sedimentations-Technik, verglichen mit der Median-Teilchengröße d50 [Masseprozent], bestimmt durch Sedimentations-Technik, des zweiten Mineral-Füllstoffs (F2), aufweist und
(b) der zweite Mineral-Füllstoff (F2) einen Lamellaritäts-Index (LI) von mehr als 2,90 aufweist, wobei der Lamellaritäts-Index durch Formel (I)

$$\frac{d50(L) - d50(S)}{d50(S)} \qquad (I)$$

definiert wird,
worin

d50 (L) die Median-Teilchengröße d50 [Masseprozent], bestimmt durch Laser-Beugungs-Technik, darstellt, und
d50 (S) die Median-Teilchengröße d50 [Masseprozent], bestimmt durch Sedimentations-Technik, darstellt,

wobei weiterhin das Gewichtsverhältnis des ersten Mineral-Füllstoffs (F1) zu dem zweiten Mineral-Füllstoff (F2) in dem Bereich von

(i) 10/90 bis unter 30/70,
oder
(ii) mehr als 70/30 bis 90/10 liegt

und wobei die Mineral-Füllstoffe (F1) und (F2) Phyllosilicate sind.

**2.** Polypropylen-Zusammensetzung nach Anspruch 1, wobei

(a) die Menge der Mineral-Füllstoffe (F1) und (F2) zusammen in der Polypropylen-Zusammensetzung 5 bis 30 Gew.-% ist,
und/oder
(b) der erste Mineral-Füllstoff (F1) einen geringeren Lamellaritäts-Index (LI), verglichen mit dem Lamellaritäts-Index (LI) des zweiten Mineral-Füllstoffs (F2), aufweist.

**3.** Polypropylen-Zusammensetzung nach Anspruch 1 oder 2, wobei

(a) der erste Mineral-Füllstoff (F1) eine Median-Teilchengröße d50 [Masseprozent], bestimmt durch Sedimentations-Technik, von unterhalb 2,0 μm aufweist, und/oder
(b) der erste Mineral-Füllstoff (F1) eine geringere Cutoff-Teilchengröße d95 [Masseprozent], bestimmt durch Sedimentations-Technik, verglichen mit der Cutoff-Teilchengröße d95 [Masseprozent], bestimmt durch Sedimentations-Technik des Mineral-Füllstoffs (F2), aufweist,

und/oder
(c) der erste Mineral-Füllstoff (F1) eine geringere spezifische Oberfläche, gemessen gemäß DIN 66131/2, verglichen mit der spezifischen Oberfläche, gemessen gemäß DIN 66131/2, des zweiten Mineral-Füllstoffs (F2), aufweist.

**4.** Polypropylen-Zusammensetzung nach einem der vorangehenden Ansprüche, wobei der erste Mineral-Füllstoff (F1)

(a) eine Median-Teilchengröße d50 [Masseprozent], bestimmt durch Sedimentations-Technik, in dem Bereich von 0,5 bis 1,5 $\mu$m,
und/oder
(b) eine Cutoff-Teilchengröße d95 [Masseprozent], bestimmt durch Sedimentations-Technik, von unter 10,0 $\mu$m,
und/oder
(c) eine spezifische Oberfläche, gemessen gemäß DIN 66131/2, von unter 20 $m^2$/g aufweist.

**5.** Polypropylen-Zusammensetzung nach einem der vorangehenden Ansprüche, wobei der zweite Mineral-Füllstoff (F2)

(a) eine Median-Teilchengröße d50 [Masseprozent], bestimmt durch Sedimentations-Technik, von gleich oder mehr als 1,0 $\mu$m,
und/oder
(b) eine Cutoff-Teilchengröße d95 [Masseprozent], bestimmt durch Sedimentations-Technik, von gleich oder mehr als 3,5 $\mu$m,
und/oder
(c) eine spezifische Oberfläche, gemessen gemäß DIN 66131/2, von gleich oder mehr als 10 $m^2$/g aufweist.

**6.** Polypropylen-Zusammensetzung nach einem der vorangehenden Ansprüche, wobei die Mineral-Füllstoffe (F1) und (F2) Talkum (T1) bzw. Talkum (T2) darstellen.

**7.** Polypropylen-Zusammensetzung nach einem der vorangehenden Ansprüche, wobei das Polypropylen (PP) ein heterophasisches Propylen-Copolymer (HECO), umfassend eine Polypropylen-Matrix (M-PP) und ein elastomeres Propylen-Copolymer (E-PP), darstellt, wobei das elastomere Propylen-Copolymer (E-PP) Einheiten umfasst, abgeleitet von

(i) Propylen und
(ii) Ethylen und/oder $C_4$ bis $C_{12}$ $\alpha$-Olefin.

**8.** Polypropylen-Zusammensetzung nach einem der vorangehenden Ansprüche, wobei die Polypropylen-Zusammensetzung eine Schmelzfluss-Rate $MFR_2$ (230°C), gemessen gemäß ISO 1133, in dem Bereich von 5 bis 80 g/10 min aufweist.

**9.** Polypropylen-Zusammensetzung nach einem der vorangehenden Ansprüche, wobei die Polypropylen-Zusammensetzung zusätzlich Plastomer(e) (P) umfasst, das / die kein elastomeres Propylen-Copolymer darstellt / darstellen.

**10.** Polypropylen-Zusammensetzung nach Anspruch 9, wobei das Plastomer (P) aus der Gruppe, bestehend aus einem niederdichten Polyethylen bzw. Hochdruck-Polyethylen, einem linear niederdichten Polyethylen bzw. einem linearen Hochdruck-Polyethylen (LLDPE), einem hochdichten Polyethylen bzw. Niederdruck-Polyethylen (HDPE), einem Styrol-BlockCopolymer (SBC) und Gemischen davon, ausgewählt ist.

**11.** Polypropylen-Zusammensetzung nach einem der vorangehenden Ansprüche, wobei das heterophasische Propylen-Copolymer (HECO)

(a) eine Schmelzfluss-Rate $MFR_2$ (230°C), gemessen gemäß
ISO 1133, in dem Bereich von 3 bis 120 g/10 min, und/oder
(b) eine in kaltem Xylol lösliche Fraktion (XCS) in dem Bereich von 20,0 bis 50,0 Gew.-% aufweist.

**12.** Polypropylen-Zusammensetzung nach einem der vorangehenden Ansprüche, wobei das heterophasische Propylen-Copolymer (HECO)

(a) einen gesamten Propylen-Gehalt von 70,0 bis 92,0 Gew.-%,
und/oder
(b) einen Propylen-Gehalt in der in kaltem Xylol löslichen Fraktion (XCS) von 40,0 bis 75,0 Gew.-% aufweist.

**13.** Polypropylen-Zusammensetzung nach einem der vorangehenden Ansprüche, wobei die Zusammensetzung

(a) mindestens 20 Gew.-% des Polypropylens (PP),
(b) gegebenenfalls 2 bis 30 Gew.-% Plastomer (P) und
(c) 5 bis 30 Gew.-% der Mineral-Füllstoffe (F1) und (F2) zusammen umfasst.

**14.** Kraftfahrzeug-Gegenstand, umfassend eine Zusammensetzung nach einem der vorangehenden Ansprüche 1 bis 13.

**15.** Verwendung der Zusammensetzung nach einem der vorangehenden Ansprüche 1 bis 13 für Kraftfahrzeug-Gegenstände.

**Revendications**

**1.** Composition de polypropylène comprenant du polypropylène (PP) et au moins deux charges minérales différentes (F1) et (F2), dans laquelle

(a) la première charge minérale (F1) présente une granulométrie médiane d50 [% en masse] déterminée par une technique de sédimentation inférieure à la granulométrie médiane d50 [% en masse] déterminée par une technique de sédimentation de la deuxième charge minérale (F2), et
(b) la deuxième charge minérale (F2) présente un indice de lamellarité (L1) supérieur à 2,90, l'indice de lamellarité étant défini par la formule (I) :

$$\frac{d50\ (L) - d50\ (S)}{d50\ (S)} \qquad (I)$$

dans laquelle

d50 (L) est la granulométrie médiane d50 [% en masse] déterminée par une technique de diffraction de lumière laser, et
d50 (S) est la granulométrie médiane d50 [% en masse] déterminée par une technique de sédimentation,

dans laquelle en outre le rapport en poids de la première charge minérale (F1) sur la deuxième charge minérale (F2) est situé dans la plage allant de

(i) 10/90 à moins de 30/70,
ou
(ii) plus de 70/30 à 90/10

et dans laquelle les charges minérales (F1) et (F2) sont des phyllosilicates.

**2.** Composition de polypropylène selon la revendication 1, dans laquelle

(a) la quantité des charges minérales (F1) et (F2) ensemble à l'intérieur de la composition de polypropylène est de 5 à 30 % en poids,
et/ou
(b) la première charge minérale (F1) présente un indice de lamellarité (L1) inférieur à l'indice de lamellarité (L1) de la deuxième charge minérale (F2).

**3.** Composition de polypropylène selon la revendication 1 ou 2, dans laquelle

(a) la première charge minérale (F1) présente une granulométrie médiane d50 [% en masse], déterminée par une technique de sédimentation, inférieure à 2,0 μm,
et/ou
(b) la première charge minérale (F1) présente une granulométrie de seuil d95 [% en masse], déterminée par une technique de sédimentation, inférieure à la granulométrie de seuil d95 [% en masse], déterminée par une technique de sédimentation, de la charge minérale (F2),
et/ou
(c) la première charge minérale (F1) présente une surface spécifique, mesurée conformément à la norme DIN 66131/2, inférieure à la surface spécifique, mesurée conformément à la norme DIN 66131/2, de la deuxième charge minérale (F2).

**4.** Composition de polypropylène selon l'une quelconque des revendications précédentes, dans laquelle la première charge minérale (F1) présente

(a) une granulométrie médiane d50 [% en masse], déterminée par une technique de sédimentation, située dans la plage allant de 0,5 à 1,5 μm,
et/ou
(b) une granulométrie de seuil d95 [% en masse], déterminée par une technique de sédimentation, inférieure à 10,0 μm,
et/ou
(c) une surface spécifique, mesurée conformément à la norme DIN 66131/2, inférieure à 20 $m^2/g$.

**5.** Composition de polypropylène selon l'une quelconque des revendications précédentes, dans laquelle la deuxième charge minérale (F2) présente

(a) une granulométrie médiane d50 [% en masse], déterminée par une technique de sédimentation, égale ou supérieure à 1,0 μm,
et/ou
(b) une granulométrie de seuil d95 [% en masse], déterminée par une technique de sédimentation, égale ou supérieure à 3,5 μm,
et/ou
(c) une surface spécifique, mesurée conformément à la norme DIN 66131/2, égale ou supérieure à 10 $m^2/g$.

**6.** Composition de polypropylène selon l'une quelconque des revendications précédentes, dans laquelle les charges minérales (F1) et (F2) sont respectivement du talc (T1) et du talc (T2).

**7.** Composition de polypropylène selon l'une quelconque des revendications précédentes, dans laquelle le polypropylène (PP) est un copolymère de propylène hétérophasique (HECO) comprenant une matrice de polypropylène (M-PP) et un copolymère de propylène élastomère (E-PP), ledit copolymère de propylène élastomère (E-PP) comprenant des motifs dérivés

(i) de propylène et
(ii) d'éthylène et/ou d'α-oléfine en $C_4$ à $C_{12}$.

**8.** Composition de polypropylène selon l'une quelconque des revendications précédentes, laquelle composition de propylène présente un indice de fluage $MFR_2$
(230°C), mesuré conformément à la norme ISO 1133, situé dans la plage allant de 5 à 80 g/10 min.

**9.** Composition de polypropylène selon l'une quelconque des revendications précédentes, laquelle composition de polypropylène comprend de plus un ou plusieurs plastomère(s) (P) qui n'est/ne sont pas un/des copolymère(s) de propylène élastomère(s).

**10.** Composition de polypropylène selon la revendication 9, dans laquelle le plastomère (P) est choisi dans l'ensemble constitué par un polyéthylène basse densité, un polyéthylène basse densité linéaire (LLDPE), un polyéthylène haute densité (HDPE), un copolymère séquencé styrénique (SBC), et leurs mélanges.

**11.** Composition de polypropylène selon l'une quelconque des revendications précédentes, dans laquelle le copolymère de propylène hétérophasique (HECO) présente

(a) un indice de fluage $MFR_2$ (230°C), mesuré conformément à la norme ISO 1133, situé dans la plage allant de 3 à 120 g/10 min,
et/ou
(b) une fraction soluble dans le xylène froid (XCS) située dans la plage allant de 20,0 à 50,0 % en poids.

**12.** Composition de polypropylène selon l'une quelconque des revendications précédentes, dans laquelle le copolymère de propylène hétérophasique (HECO) présente

(a) une teneur totale en propylène de 70,0 à 92,0 % en poids,
et/ou
(b) une teneur en propylène de la fraction soluble dans le xylène froid (XCS) de 40,0 à 75,0 % en poids.

**13.** Composition de polypropylène selon l'une quelconque des revendications précédentes, laquelle composition comprend

(a) au moins 20 % en poids de polypropylène (PP),
(b) éventuellement 2 à 30 % en poids de plastomère (P), et
(c) 5 à 30 % en poids des charges minérales (F1) et (F2) ensemble.

**14.** Article d'automobile comprenant une composition selon l'une quelconque des revendications 1 à 13.

**15.** Utilisation de la composition selon l'une quelconque des revendications 1 à 13 pour des articles d'automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0887379 A1
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A

### Non-patent literature cited in the description

- Glossary of basic terms in polymer science. *IUPAC recommendations,* 1996
- **GACHTER ; MULLER.** Plastics Additives Handbook. Hansa Publishers, 1993
- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339